# EUROPÄISCHE PATENTSCHRIFT

(11) **EP 0 737 303 B1**
(45) Veröffentlichungstag und Bekanntmachung des Hinweises auf die Patenterteilung: **10.03.1999**
(21) Anmeldenummer: 95934133.0
(22) Anmeldetag: 05.10.1995
(51) Int. Cl.: G01F 1/58

(54) **MAGNETISCH-INDUKTIVES MESSGERÄT FÜR STRÖMENDE MEDIEN**
MAGNETIC-INDUCTIVE MEASUREMENT APPARATUS FOR FLOWING MEDIA
APPAREIL MAGNETO-INDUCTIF DE MESURE DE MILIEUX EN ECOULEMENT

(30) Priorität: 07.10.1994 DE 4435966; 20.12.1994 DE 4445591
(43) Veröffentlichungstag der Anmeldung: 16.10.1996
(73) Patentinhaber: KROHNE MESSTECHNIK GMBH & CO. KG, D-47058 Duisburg (DE)
(72) Erfinder: KLEIN, Jürgen, Winfried, D-45525 Hattingen (DE); DULLENKOPF, Peter, D-44892 Bochum (DE); TEN HAVE, Anrd, D-46119 Oberhausen (DE); LENNIGER, Andreas, D-59609 Anröchte (DE); STRATMANN, Andreas, D-45144 Essen (DE)
(74) Vertreter: Patentanwälte Gesthuysen, von Rohr, Weidener, Häckel
(86) Internationale Anmeldenummer: EP9503925
(87) Internationale Veröffentlichungsnummer: WO9611384

(56) Entgegenhaltungen:
- EP-A- 0 142 048
- WO-A-83/02000
- DE-A- 1 584 918
- DE-A- 4 303 402
- JP-A- 2 099 829
- JP-A-58 196 419
- US-A- 3 329 020
- US-A- 3 411 355
- US-A- 4 019 386
- US-A- 5 337 607
- PATENT ABSTRACTS OF JAPAN Bd. 7, Nr. 90 (P-191) 1235 14 April 1983 & JP,A,58 017 318 (HOKUSHIN) 01 Februar 1983
- THE REVIEW OF SCIENTIFIC INSTRUMENTS, Bd. 36, Nr. 8, August 1965 Seiten 1142-1148, V. CUSHING 'ELECTROMAGNETIC FLOWMETER'
- MARKT&TECHNIK-WOCHENZEITUNG FÜR ELEKTRONIK, no.23, 03.06.94, page 36 - 37, 'MEHRSCHICHTKERAMIK ALS HYBRIDSUBSTRAT'

## Beschreibung

Die Erfindung betrifft ein magnetisch-induktives Durchflußmeßgerät für strömende Medien mit einem als Meßleitung dienenden, aus keramischem Material bestehenden Rohrstück, mit einem Magneten zur Erzeugung eines senkrecht zur Rohrachse verlaufenden Magnetfeldes, mit mindestens zwei senkrecht zur Rohrachse und senkrecht zur Magnetfeldrichtung angeordneten Meßelektroden, mit mindestens zwei die Meßelektroden gegenüber äußeren elektrischen Feldern abschirmenden Abschirmelektroden und mit einer das Rohrstück umgebenden, aus keramischem Material bestehenden Schicht, wobei die Meßelektroden und die Abschirmelektroden außerhalb des Meßrohrstücks angebracht sind und wobei die Meßelektroden im Inneren der Schicht oder an der Grenzfläche zwischen der Schicht und dem Rohrstück angeordnet sind.

Ein derartiges Durchflußmeßgerät ist beispielsweise aus der US 5,337,607 A, von der die vorliegende Erfindung ausgeht, bekannt. Bei diesem bekannten Durchflußmeßgerät erfolgt die Herstellung dergestalt, daß zunächst das Rohrstück aus einem keramischen Material geformt wird, daß dann ein leitfähiges Material, vorzugsweise ein Metall, auf der Oberfläche des Rohrstücks abgeschieden wird, wo es später die Meßelektroden bildet, und daß schließlich eine Schicht aus keramischem Material das Rohrstück und das abgeschiedene leitfähige Material umgebend aufgebracht wird. Diese Anordnung wird schließlich gebrannt und an ihrer Oberfläche mit einer Abschirmelektrode aus Metall versehen.

Weiter ist aus der DE 1 548 918 A1 ein magnetisch-induktives Durchflußmeßgerät für strömende Medien bekannt, bei dem mehrere die Meßelektroden gegenüber äußeren elektrischen Feldern abschirmende Abschirmelektroden vorgesehen sind, die ebenso wie die Meßelektroden zwischen verschiedenen Schichten keramischer Materialien angeordnet sind.

Aus der JP 58-196 419 A (vgl. Patents Abstracts of Japan, sect. 8 (1984) volume 8, Nr. 45 (P-257)) ist außerdem ein Verfahren zur Herstellung einer Meßleitung eines magnetisch-induktiven Durchflußmeßgerätes bekannt, bei dem zunächst ein erstes, ein zweites und ein drittes Rohrstück aus keramischem Material hergestellt werden. Auf dem ersten Rohrstück wird dann eine Meßelektrode durch Metallisierungen aufgebracht, auf der zweiten Meßelektrode wird ebenfalls durch Metallisierung eine erste Abschirmelektrode aufgebracht und auf dem dritten Rohrstück wird schließlich ebenfalls durch Metallisierung eine zweite Abschirmelektrode aufgebracht. In diesem Zustand werden diese drei noch nicht gebrannten Rohrstücke ineinandergesteckt und im Verbund gebrannt.

Den vorstehend erläuterten, aus dem Stand der Technik bekannten magnetisch-induktiven Durchflußmeßgeräten für strömende Medien ist gemeinsam, daß die Herstellung der Meßleitung in Verbindung mit den Meßelektroden und den Abschirmelektroden ein großes fertigungstechnisches Problem darstellt. Zum einem ist die Fertigung aufwendig und kostspielig und zum anderen kann selbst bei diesen aufwendigen Fertigungsmethoden nicht gewährleistet werden, daß die Durchflußmeßgeräte reproduzierbare Eigenschaften aufweisen.

Ein weiteres Durchflußmeßgerät ist aus der DE 33 37 151 A1 bekannt. Bei diesem Durchflußmeßgerät sind die Meßelektroden und die Abschirmelektroden galvanisch auf der Oberfläche des keramischen Rohrstückes aufgebracht. Durch diese Anordnung kann die Meßelektrode lediglich zur Seite hin abgeschirmt werden. Um nun eine Abschirmung radial nach außen zu ermöglichen, wird in der DE 33 37 151 A1 vorgeschlagen, einen keramischen Tragkörper im Bereich der Meßelektrode von außen zu befestigen. Dieser keramische Tragkörper weist auf den Oberflächen, die nach Anbringung des Tragkörpers an dem Rohrstück die äußeren Oberflächen der gesamten Anordnung bilden, Abschirmelektroden auf, die ebenfalls galvanisch aufgebracht sind. Um nun eine feste Verbindung des keramischen Tragkörpers mit dem die Meßelektroden und die Abschirmelektroden aufweisenden Rohrstück herzustellen, wird die auf dem keramischen Tragkörper aufgebrachte Abschirmelektrode mit der auf dem Rohrstück aufgebrachten Abschirmelektrode verlötet. Das elektrische Signal, das von der Meßelektrode erzeugt wird, wird mit Hilfe eines Kontaktstiftes nach außen abgeführt, der durch eine Bohrung in dem keramischen Tragkörper verläuft. Dabei ist weiter vorgesehen, die Bauteile des Vorverstärkers direkt auf den auf dem keramischen Tragkörper angeordneten Abschirmelektroden sowie mit dem Kontaktstift zu verbinden, die wiederum von einem Abschirmbecher abgeschirmt werden, der von außen an dem Tragkörper befestigt wird.

Bei dem aus der DE 33 37 151 A1 bekannten Durchflußmeßgerät treten nun verschiedene Nachteile auf. Zum einen sind für die Herstellung der Abschirmung der Meßelektrode eine Vielzahl von Arbeitsgängen nötig. Dazu werden zunächst die Meßelektroden und Abschirmelektroden galvanisch auf dem Rohrstück aufgebracht. In einem separaten Vorgang werden die keramischen Tragkörper hergestellt, auf denen anschließend durch Galvanisieren die Abschirmelektroden aufgebracht werden. Schließlich ist es erforderlich, den keramischen Tragkörper an dem Rohrstück zu befestigen, in dem am äußeren Rand der Berührungsfläche die auf dem Rohrstück aufgebrachten Abschirmelektroden mit den auf den Tragkörpern aufgebrachten Abschirmelektroden durch Anlöten verbunden werden. Es sind also eine Vielzahl von Arbeitsschritten für die Herstellung der Anordnung der Meß- und Abschirmelektroden erforderlich.

Weiter ist bei dem aus der DE 33 37 151 A1 bekannten Durchflußmeßgerät nachteilig, daß bei der Abschirmung der Meßelektrode Fehler auftreten können, wenn die Lötstellen beispielsweise durch Erschütterungen beschädigt werden und somit Lücken in der Abschirmung auftreten können. Ein weiterer Nachteil besteht bei diesem Durchflußmeßgerät darin, daß durch die Befestigung der keramischen Tragkörper sowie der daran befestigten Abschirmbecher eine große Bauhöhe des gesamten Durchflußmeßgerätes entsteht, so daß eine kompakte Bauweise des Durchflußmeßgerätes nicht möglich ist.

Weiterhin ist aus dem Stand der Technik, der DE 43 03 402 A1, ein magnetisch-induktives Durchflußmeßgerät bekannt, das mit berührungslosem kapazitivem Abgriff die Strömungsgeschwindigkeit von dielektrischen oder elektrisch leitenden Medien mißt. Da sowohl die Meßelektroden als auch die Abschirmelektroden auf der äußeren Oberfläche des Rohrstückes angeordnet sind, können die Abschirmelektroden, durch diese Anordnung bedingt, die Meßelektroden nur seitlich abschirmen, so daß weitere Maßnahmen notwendig sind, um die Meßelektroden radial nach außen abzuschirmen. Dazu wird in der DE 43 03 402 Al angegeben, von den Meßelektroden isolierte und mit den Abschirmelektroden leitend verbundene Abschirmabdeckungen von außen an dem Rohrstück anzuordnen. Diese kastenförmigen Abschirmabdeckungen werden dazu an die Abschirmelektroden angelötet. Um weiterhin die von den Meßelektroden erzeugten Spannungssignale weiterzuverarbeiten, sind Signalleitungen an die Meßelektroden angelötet, wobei diese Signalleitungen für eine Weiterverarbeitung dieser elektrischen Signale nach außen geführt sind.

Das aus der DE 43 03 402 A1 bekannte magnetisch-induktive Durchflußmeßgerät weist verschiedene Nachteile auf. Zum einen ist es lediglich in einer Lage, also direkt auf der Oberfläche des Meßrohres möglich, metallische Elektroden und Abschirmungen auf dem Keramikrohr anzubringen. Dadurch ist es - wie auch bei dem zuvor beschriebenem, aus dem Stand der Technik bekannten Durchflußmeßgerät - gerade nicht möglich, die Meßelektrode nach außen durch die auf dem Keramikrohr angebrachten Abschirmungen abzuschirmen. Daher ist eine aufwendige, kastenförmige Abschirmabdeckung notwendig, die an die Abschirmelektroden angelötet--werden müssen. Das ist schon deshalb nachteilig, weil für die Herstellung des Durchflußmeßgerätes ein separater Bearbeitungsvorgang zur Herstellung einer solchen Abschirmung notwendig ist. Darüber hinaus ist das Anlöten der Abschirmabdeckung an die Abschirmelektroden einerseits aufwendig und andererseits störanfällig, da durch auftretende Vibrationen die Lötstellen beschädigt werden, so daß Risse oder sogar Bruchstellen auftreten und somit nur noch eine fehlerhafte Abschirmung möglich ist.

Aus der Zeitschrift "Markt & Technik-Wochenzeitung für Elektronik", Nummer 23 vom 3. Juni 1994, Seite 36, ist die Verwendung von bei niedriger Temperatur sinternden flexiblen Keramikfolien in der Dickschichttechnik bekannt, um komplexe Mehrlagenschaltungen zu realisieren. Bei dieser bekannten LTCC-Technologie ("Low Temperature Cofired Ceramic"-Technologie) werden ungebrannte LTCC-Folien mechanisch strukturiert, in Dickschichttechnik bedruckt, laminiert und anschließend bei hoher Temperatur gesintert, wodurch dann eine Mehrschichtkeramik entsteht.

Die vorliegende Erfindung stellt sich nunmehr die Aufgabe, das aus dem Stand der Technik bekannte magnetisch-induktive Durchflußmeßgerät für strömende Medien derart auszugestalten und weiterzubilden, daß die Meßelektroden und die Abschirmelektroden herstellungstechnisch einfacher und zuverlässiger außerhalb des Rohrstückes angebracht werden können.

Die zuvor aufgezeigte Aufgabe ist erfindungsgemäß dadurch gelöst, daß mindestens eine bei niedriger Temperatur sinternde, flexible LTCC-Keramikfolie die Schicht bildet und daß die Meßelektroden und die Abschirmelektroden auf den Oberflächen oder im Inneren der LTCC-Keramikfolie angeordnet sind. Diese erfindungsgemäße Ausgestaltung gewährleistet eine deutliche Vereinfachung des Aufbaus und des Herstellungsverfahrens von magnetisch-induktiven Durchflußmeßgeräten. Die ungebrannten LTCC-Keramikfolien werden, bevor sie auf das Rohrstück aufgebracht werden, in geeigneter Weise mit einer leitenden Schicht versehen, so daß die zuvor beschriebene Anordnung der Meßelektroden und Abschirmelektroden erzeugt wird, wenn beispielsweise zwei dieser LTCC-Keramikfolien übereinander auf dem Rohrstück angebracht werden. Dabei ist es weiterhin vorteilhaft, daß die so gebildeten Meßelektroden und Abschirmelektroden zwischen den LTCC-Keramikfolien, also an deren Grenzfläche, sowie auf der äußeren Oberfläche der außenliegenden LTCC-Keramikfolien angeordnet sind. Denn bei dem anschließenden Sintervorgang entsteht eine die das Rohrstück umgebende Schicht bildende Mehrschichtkeramik, in der die Anordnung der Meß- und Abschirmelektroden integriert ist. Die Anwendung der LTCC-Technologie bei der Herstellung des erfindungsgemäßen magnetisch-induktiven Durchflußmeßgerätes ermöglicht also in besonders vorteilhafter Weise, daß der Herstellungsprozeß erheblich vereinfacht und gleichzeitig eine sehr genaue Positionierung der Meß- und Abschirmelektroden ermöglicht wird.

Die erfindungsgemäße Lehre ermöglicht die Herstellung der gesamten Meßelektroden- und Abschirmelektrodenanordnung in einem Arbeitsschritt, so daß das aus dem Stand der Technik bekannte Anlöten zusätzlicher Abschirmelektroden vermieden wird. Schließlich weist die das Rohrstück umgebende Schicht nur eine geringe Dicke auf, so daß die Größe des Durchflußmeßgerätes nur geringfügig durch die Aufbringung der LTCC-Keramikfolie vergrößert wird.

In einer besonders vorteilhaften Ausgestaltung der vorliegenden Erfindung werden darüber hinaus die für die für jede Meßelektrode vorgesehenen Vorverstärker notwendigen Leiter- und Widerstandsbahnen in der Schicht mit Hilfe der LTCC-Technologie hergestellt. Dadurch werden extrem kurze Leiterbahnen ermöglicht, so daß eine zuverlässige Vorverarbeitung der von den Meßelektroden erzeugten elektrischen Signale sozusagen vor Ort ermöglicht wird. Die für den Aufbau der Vorverstärker notwendigen Bauelemente können somit direkt auf der Schicht, also sozusagen direkt auf dem als Meßleitung dienenden Rohrstück installiert werden. Der Mantel des Rohrstückes wird somit selbst zum Träger von elektronischen Bauteilen. Wird nun auch die leitende Verbindung von jeder Meßelektrode zu dem zugeordneten Vorverstärker mit Hilfe der LTCC-Technologie hergestellt, so werden sämtliche zuvor aufgezeigten Vorteile für das gesamte System, bestehend aus Meß- und Abschirmelektroden und Vorverstärker, ausgenutzt.

Ein weiterer Vorteil des erfindungsgemäßen Aufbaus des Durchflußmeßgerätes liegt darin, daß die bekannten, störenden Mikrophonieeffekte durch die Verwendung der Dickschichttechnik ausgeschlossen werden. Die Störungen durch Mikrophonieeffekte werden infolge Spalt- oder Rißbildung, d. h. feinste Hohlräume zwischen Elektrodenoberfläche und Dielektrika und/oder durch geringfügige Relativbewegungen der Elektrodenanschlüsse gegen das magnetische und/oder elektrische Feld der Erregeranordnung des Durchflußmeßgerätes, hervorgerufen, die eine Messung des Volumenstromes aufgrund der geringen Größe der Meßsignale praktisch unmöglich machen. Wird nun dagegen erfindungsgemäß die LTCC-Technologie verwendet, so werden durch den Sintervorgang feste keramische Strukturen erzeugt, die die zu Mikrophonieeffekten führenden Spalt- oder Rißbildungen sowie die Relativbewegungen der Elektrodenanschlüsse unmöglich machen.

Schließlich soll noch hervorgehoben werden, daß das zuvor beschriebene erfindungsgemäße magnetisch-induktive Durchflußmeßgerät eine sehr hohe Zuverlässigkeit bis zu sehr hohen Temperaturen aufweist und daß darüber hinaus dann, wenn auch die Leiter- und Widerstandsbahnen für den Aufbau der Vorverstärker in LTCC-Technologie hergestellt sind, eine gute Temperaturkopplung zwischen den beiden Vorverstärkern gegeben ist, die in vorteilhafterweise den Temperaturgleichlauf verbessert.

Im folgenden wird die vorliegende Erfindung anhand eines Ausführungsbeispiel unter Hinzunahme der Zeichnung näher erläutert. In der Zeichnung zeigt
- Fig. 1: einen Querschnitt durch das Rohrstück eines ersten Ausführungsbeispiels eines erfindungsgemäßen Durchflußmeßgerätes,
- Fig. 2: einen Querschnitt durch das Rohrstück eines zweiten Ausführungsbeispiels eines erfindungsgemäßen Durchflußmeßgerätes,
- Fig. 3: in einer Draufsicht das Rohrstück des in Fig. 1 dargestellten Ausführungsbeispiels,
- Fig. 4: einen Querschnitt durch das Rohrstück eines dritten Ausführungsbeispiels eines erfindungsgemäßen Durchflußmeßgerätes und
- Fig. 5: einen Querschnitt durch das Rohrstück eines vierten Ausführungsbeispiels eines erfindungsgemäßen Durchflußmeßgerätes.

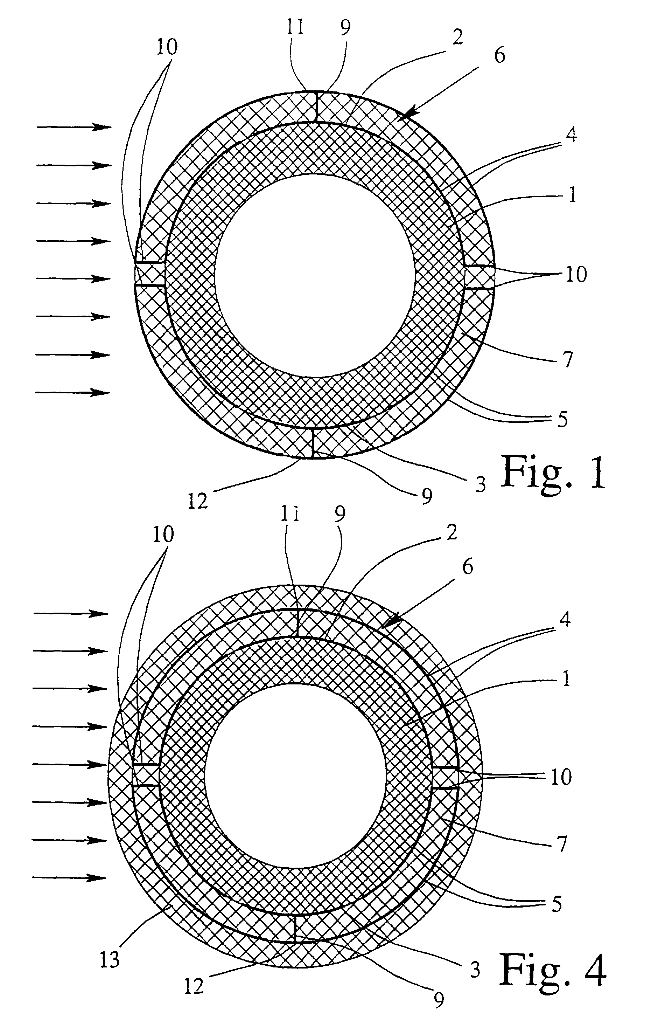

In Fig. 1 ist das als Meßleitung dienende und aus keramischem Material bestehende Rohrstück 1 im Querschnitt dargestellt. Die Verwendung von Keramik als Material des Rohrstückes 1 bietet sich gerade dann an, wenn es sich bei den zu messenden strömenden Medien um aggressive, beispielsweise stark korrodierende Flüssigkeiten oder um Medien mit hoher Temperatur handelt. Ein im wesentlichen senkrecht zur Rohrachse verlaufendes Magnetfeld wird von einem in der Zeichnung nicht dargestellten Magneten erzeugt, wobei in Fig. 1 mit Hilfe der Pfeile der Verlauf des Magnetfeldes schematisch dargestellt ist. Aufgrund dieses Magnetfeldes und aufgrund der Geschwindigkeit der in dem Medium vorhandenen geladenen Teilchen werden diese aufgrund der Lorentz-Kraft von ihrer Bahn senkrecht zur Rohrachse und senkrecht zur Magnetfeldrichtung abgelenkt. Dadurch werden unterschiedlich geladene Teilchen voneinander getrennt, so daß sich im strömenden Medium eine Ladungspolarisation und somit ein elektrisches Feld ausbildet.

Dieses elektrische Feld kann von in der Nähe des strömenden Mediums vorzugsweise senkrecht zur Rohrachse und vorzugsweise senkrecht zur Magnetfeldrichtung angeordneten Meßelektroden 2 und 3 gemessen werden. Bei dem erfindungsgemäßen magnetisch-induktiven Durchflußmeßgerät befinden sich die Meßelektroden 2 und 3 nicht in einem direkten Kontakt mit dem strömenden Medium sondern sie sind außerhalb des Rohrstückes angeordnet.

Die an den Meßelektroden 2 und 3 gemessenen Spannungswerte weisen lediglich eine geringe Amplitude auf, so daß es notwendig ist, die Meßelektroden 2 und 3 gegenüber äußeren elektrischen Feldern gut abzuschirmen. Dazu sind mindestens zwei die Meßelektroden 2 und 3 abschirmende Abschirmelektroden 4 und 5 vorgesehen, die ebenfalls außerhalb des Rohrstückes 1 angeordnet sind.

Bei dem in Fig. 1 dargestellten ersten Ausführungsbeispiel ist weiter eine aus einem keramischen Material bestehende Schicht 6 vorgesehen, die das Rohrstück 1 umgibt. In dieser Schicht 6 sind die Meßelektroden 2 und 3 im wesentlichen im Inneren der Schicht 6 angeordnet. Jedoch ist es auch möglich, die Meßelektroden 2 und 3 so an der Innenfläche der Schicht 6 anzuordnen, daß sie an der Grenzfläche zwischen dem Rohrstück 1 und der Schicht 6 liegen. Des weiteren sind auch die Abschirmelektroden 4 und 5 in der Schicht 6 angeordnet, wobei die Abschirmelektroden 4 und 5 sowohl teilweise im Inneren der Schicht 6 als auch an der Grenzfläche zwischen der Schicht 6 und dem Rohrstück 1 bzw. an der äußeren Oberfläche der Schicht 6 angeordnet sind. Durch diese Anordnung der Meßelektroden 2 und 3 und der Abschirmelektroden 4 und 5 wird eine nahezu vollständige Abschirmung der Meßelektroden 2, 3 nach außen hin erreicht.

Erfindungsgemäß ist die Schicht 6 aus mindestens einer bei niedriger Temperatur sinternden, flexiblen LTCC-Keramikfolie 7, 8 gebildet. Dadurch werden die zuvor aufgezeigten, mit der Verwendung dieser Keramikfolien verbundenen Vorteile auf die Herstellung von Durchflußmeßgeräten übertragen.

Bei dem in Fig. 1 dargestellten ersten Ausführungsbeispiel eines Durchflußmeßgerätes wird nun erfindungsgemäß die Schicht 6 im wesentlichen aus der LTCC-Keramikfolie 7 gebildet. Die LTCC-Keramikfolie 7 weist flächige metallische Beschichtungen auf, die so angeordnet sind, daß, nachdem die LTCC-Keramikfolie 7 auf dem Rohrstück 1 angebracht worden ist, diese metallischen Flächen die Meßelektroden 2 und 3 sowie die Abschirmelektroden 4 und 5 bilden. Dabei sind einerseits zwischen dem Rohrstück 1 und der LTCC-Keramikfolie 7, also an deren Grenzfläche, und andererseits auf der Außenseite der LTCC-Keramikfolie 7 Teile der Meßelektroden 2 und 3 und Teile der Abschirmelektroden 4 und 5 angeordnet. Um nun von den innen angeordneten Teilen der Meßelektroden 2 und 3 und der Abschirmelektroden 4 und 5 eine leitende Verbindung mit den auf der äußeren Oberfläche der LTCC-Keramikfolie 7 angeordneten Teilen der Meßelektroden 2 und 3 und der Abschirmelektroden 4 und 5 zu erzeugen, sind in der LTCC-Keramikfolie 7 an geeigneten Stellen Durchkontaktierungen 9 für die Meßelektroden 2 und 3 sowie Durchkontaktierungen 10 für die Abschirmelektroden 4 und 5 vorgesehen.

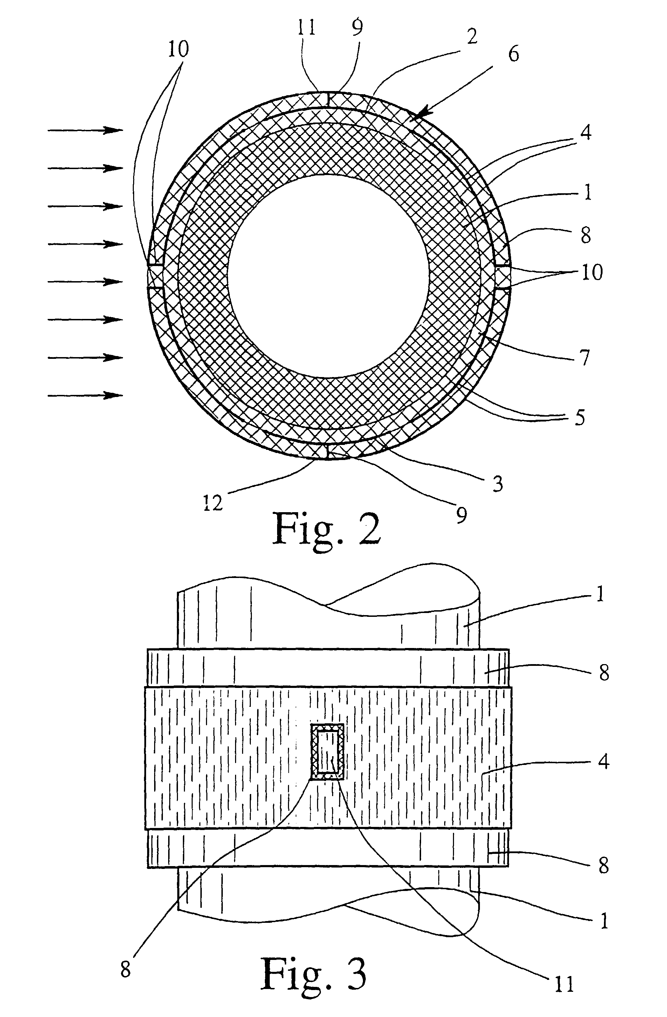

Bei dem in Fig. 2 dargestellten zweiten Ausführungsbeispiel ist nun die Schicht 6 aus zwei LTCC-Keramikfolien 7 und 8 zusammengesetzt. Die LTCC-Keramikfolien 7 und 8 weisen flächige metallische Beschichtungen auf, die so angeordnet sind, daß, nachdem die LTCC-Keramikfolien 7 und 8 auf dem Rohrstück 1 angebracht worden sind, diese metallischen Flächen die Meßelektroden 2 und 3 sowie die Abschirmelektroden 4 und 5 bilden. Dabei sind einerseits zwischen den LTCC-Keramikfolien 7 und 8, also an deren Grenzfläche, und andererseits auf der Außenseite der äußeren LTCC-Keramikfolie 8 Teile der Meßelektroden 2 und 3 und Teile der Abschirmelektroden 4 und 5 angeordnet. Da also die Schicht 6 aus den übereinanderliegenden LTCC-Keramikfolien 7 und 8 gebildet wird, befinden sich die im Inneren der Schicht 6 liegenden Teile der Meßelektroden 2 und 3 und der Abschirmelektroden 4 und 5 in einem fest definierten Abstand zum Rohrstück 1 in der Schicht 6. Um nun von den innen angeordneten Teilen der Meßelektroden 2 und 3 und der Abschirmelektroden 4 und 5 eine leitende Verbindung mit den auf der äußeren Oberfläche der LTCC-Keramikfolie 8 angeordneten Teilen der Meßelektroden 2 und 3 und der Abschirmelektroden 4 und 5 zu erzeugen, sind - in gleicher Weise wie zuvor beschrieben - in der äußeren LTCC-Keramikfolie 8 an geeigneten Stellen Durchkontaktierungen 9 für die Meßelektroden 2 und 3 sowie Durchkontaktierungen 10 für die Abschirmelektroden 4 und 5 vorgesehen.

Bei den in den Fig. 1 und 2 dargestellten Ausführungsbeispielen des erfindungsgemäßen magnetisch-induktiven Durchflußmeßgerätes sind die Meßelektroden 2 und 3 mit Hilfe der Durchkontaktierungen 9 mit Kontaktflächen 11 und 12 leitend verbunden, an denen die von den Meßelektroden 2 und 3 erzeugten Spannungssignale abgreifbar sind. Die Kontaktfläche 11 ist auch in der in Fig. 3 dargestellten Draufsicht des erfindungsgemäßen magnetisch-induktiven Durchflußmeßgerätes zu erkennen. In dieser besonderen Ausgestaltung ist die Kontaktfläche 11 rechteckig. Wie ebenfalls gut in Fig. 3 zu erkennen ist, ist es natürlich notwendig, daß die Abschirmelektrode 4 in einem Bereich um die Kontaktfläche 11 herum ausgespart ist. Im übrigen Bereich, also entlang des die Meßelektroden 2 und 3 umfassenden Abschnitts auf der Außenseite des Rohrstückes 1, bildet die Abschirmelektrode 4 eine durchgehende Fläche. Wegen der symmetrischen Anordnung sowohl der Meßelektroden 2 und 3 als auch der Abschirmelektroden 4 und 5 gilt die dargestellte Ausgestaltung der Abschirmelektrode 4 auch für die Abschirmelektrode 5.

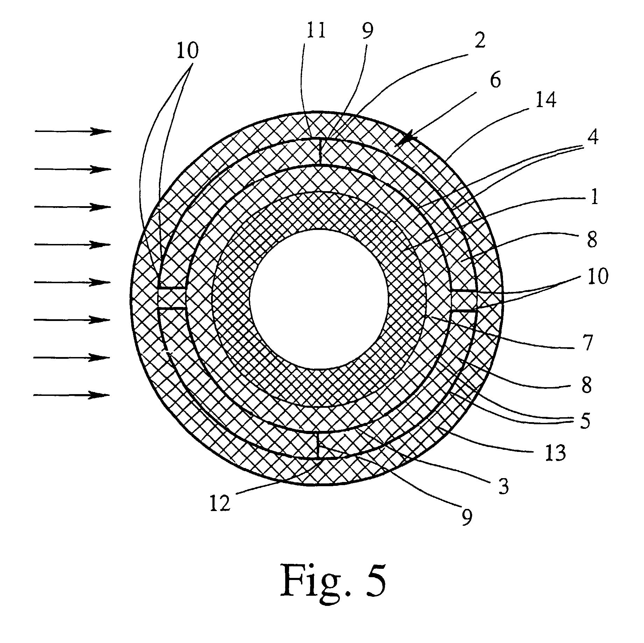

Die beiden in den Fig 1 und 2 dargestellten Ausführungsbeispiele eines erfindungsgemäßen Durchflußmeßgerätes können mit einer weiteren LTCC-Keramikfolie 13 umgeben sein, wie es bei den Fig. 4 und 5 dargestellten dritten und vierten Ausführungsbeispielen der Fall ist. Diese weitere LTCC-Keramikfolie 13 dient dabei hauptsächlich einer zusätzlichen Abschirmung. Dazu weist - wie in Fig. 5 dargestellt - die Schicht 6 beim vierten Ausführungsbeispiel eine weitere Abschirmelektrode 14 auf, die vorzugsweise die Abschirmelektroden 4 und 5 nach außen abschirmt.

Schließlich kann die Wirkung der Abschirmung der Abschirmelektroden 4, 5 und 13 noch dadurch verstärkt werden, daß einerseits die Abschirmelektroden 4 und 5 mit den Meßelektroden 2 und 3 elektrisch mitgeführt werden (Bootstrap) und daß andererseits die Abschirmelektrode 14 mit einem festen Bezugspotential, vorzugsweise mit der Erde, elektrisch leitend verbunden ist.

Da - wie bereits beschrieben - die Amplitude der elektrischen Signale, die an den Meßelektroden 2 und 3 zur Verfügung stehen, sehr gering ist, ist es vorteilhaft, diese Meßsignale vor einer Weiterverarbeitung mit Hilfe von Vorverstärkern zu verstärken, wobei weiterhin vorteilhaft ist, wenn die Signalleitungen zwischen den Meßelektroden 2 und 3 und den zugeordneten Vorverstärkern möglichst kurz gehalten werden.

Dafür ist nun bei dem erfindungsgemäßen magnetisch-induktiven Durchflußmeßgerät in einer weiteren Ausgestaltung vorgesehen, die für den Aufbau der Vorverstärker notwendigen Leiter- und Widerstandsbahnen in der Schicht 6 mit LTCC-Technologie herzustellen. Dazu werden auf den LTCC-Keramikfolien 7 und 8 vor dem Anbringen auf dem Rohrstück 1 außerhalb der durch die metallischen Flächen der Meßelektroden 2 und 3 und der Abschirmelektroden 4 und 5 bedeckten Bereiche entsprechende Strukturen gebildet. Dazu kann - so vorhanden - in bevorzugter Weise auch von der zusätzlichen LTCC-Keramikfolie 13 Gebrauch gemacht werden.

In besonders vorteilhafter Weise ist eine leitende Verbindung von jeder Meßelektrode 2 bzw. 3 zu dem jeweiligen zugeordneten Vorverstärker ebenfalls in der Schicht 6, vorzugsweise in der LTCC-Keramikfolie 13, mit LTCC-Technologie hergestellt, wobei vorzugsweise auch die notwendige Abschirmung dieser leitenden Verbindung in gleicher Weise realisiert ist. Dadurch ergibt sich nach dem Sintern eine komplexe Struktur in der Schicht 6, die sowohl die Anordnung der Meßelektroden 2 und 3 und der Abschirmelektroden 4 und 5 als auch die Signalleitung und die für den Aufbau des Vorverstärkers notwendigen Leiter- und Widerstandsbahnen beinhaltet. Es ist dann lediglich noch erforderlich, die elektronischen Bauteile direkt auf der Schicht 6 anzuordnen, um vorverstärkte Meßsignale der beiden Meßelektroden 2 und 3 zu erhalten.

Mit anderen Worten ist im Rohrstück 1 zusammen mit der Schicht 6 ein großer Teil des Meßsystems integriert, wobei die keramische Schicht 6 sogar als "Trägerplatine" für die elektronischen Bausteine des Vorverstärkers dient.

Für sämtliche in den Fig. 1, 2, 4 und 5 dargestellten Ausführungsbeispiele gilt, daß jeweils die LTCC-Keramikfolien 7, 8 und 13 übertrieben dick dargestellt worden sind, um die Anordnung der metallischen Flächen anschaulich darzustellen.

## Patentansprüche

1. Magnetisch-induktives Durchflußmeßgerät für strömende Medien mit einem als Meßleitung dienenden, aus keramischem Material bestehenden Rohrstück (1), mit einem Magneten zur Erzeugung eines senkrecht zur Rohrachse verlaufenden Magnetfeldes, mit mindestens zwei senkrecht zur Rohrachse und senkrecht zur Magnetfeldrichtung angeordneten Meßelektroden (2, 3), mit mindestens zwei die Meßelektroden (2, 3) gegenüber äußeren elektrischen Feldern abschirmenden Abschirmelektroden (4, 5) und mit einer das Rohrstück (1) umgebenden, aus keramischem Material bestehenden Schicht (6), wobei die Meßelektroden (2, 3) und die Abschirmelektroden (4, 5) außerhalb des Rohrstücks (1) angebracht sind und wobei die Meßelektroden (2, 3) im Inneren der Schicht (6) oder an der Grenzfläche zwischen der Schicht (6) und dem Rohrstück (1) angeordnet sind, **dadurch gekennzeichnet,** daß mindestens eine bei niedriger Temperatur sinternde, flexible LTCC-Keramikfolie (7) die Schicht (6) bildet und daß die Meßelektroden (2, 3) und die Abschirmelektrode (4, 5) auf den Oberflächen oder im Inneren der LTCC-Keramikfolie (7) angeordnet sind.

2. Durchflußmeßgerät nach einem der vorangegangenen Ansprüche, dadurch gekennzeichnet, daß einerseits an der Grenzfläche zwischen der LTCC-Keramikfolie (7) und dem Rohrstück (1) und andererseits auf der Außenseite der LTCC-Keramikfolie (7) Teile der Meßelektroden (2, 3) und Teile der Abschirmelektroden (4, 5) angeordnet sind, wobei durch die LTCC-Keramikfolie (7) verlaufende Durchkontaktierungen (9, 10) vorgesehen sind.

3. Durchflußmeßgerät mit mindestens zwei LTCC-Keramikfolien (7, 8) nach Anspruch 1, dadurch gekennzeichnet, daß einerseits an der Grenzfläche zwischen den LTCC-Keramikfolien (7, 8) und andererseits auf der Außenseite der äußeren LTCC-Keramikfolie (8) Teile der Meßelektroden (2, 3) und Teile der Abschirmelektroden (4, 5) angeordnet sind, wobei durch die äußere LTCC-Keramikfolie (8) verlaufende Durchkontaktierungen (9, 10) vorgesehen sind.

4. Durchflußmeßgerät nach einem der voranstehenden Ansprüche, dadurch gekennzeichnet, daß die Meßelektroden (2, 3) so ausgestaltet sind, daß sie auf der äußeren Oberfläche der Schicht (6) eine Kontaktfläche (11, 12) aufweisen.

5. Durchflußmeßgerät nach einem der vorangegangenen Ansprüche, dadurch gekennzeichnet, daß die Abschirmelektroden (4, 5) in dem die Meßelektroden (2, 3) umgebenden Abschnitten auf der Außenseite der Schicht (6) außer in einem Bereich um die Kontaktflächen (11, 12) der Meßelektroden (2, 3) herum eine durchgehende Fläche bilden.

6. Durchflußmeßgerät nach einem der vorangegangenen Ansprüche, dadurch gekennzeichnet, daß die Schicht (6) eine weitere, außen angeordnete LTCC-Keramikfolie (13) aufweist.

7. Dufchflußmeßgerät nach Anspruch 6, dadurch gekennzeichnet, daß die weitere LTCC-Keramikfolie (13) eine weitere Abschirmelektrode (14) aufweist und daß die weitere Abschirmelektrode (14) die Abschirmelektroden (4, 5) umgibt.

8. Durchflußmeßgerät nach Anspruch 7, dadurch gekennzeichnet, daß die Abschirmelektroden (4, 5) elektrisch mit der Meßelektrode (2, 3) mitgeführt ist und daß die weitere Abschirmelektrode (14) mit einem festen Bezugspotential verbunden und vorzugsweise geerdet ist.

9. Durchflußmeßgerät nach einem der vorangegangenen Ansprüche, dadurch gekennzeichnet, daß für jede Meßelektrode (2, 3) ein Vorverstärker vorgesehen ist und daß die für den Aufbau des Vorverstärkers notwendigen Leiter- und Widerstandsbahnen in der Schicht (6) und vorzugsweise in der LTCC-Keramikfolie (13) mit LTCC-Technologie hergestellt sind.

10. Durchflußmeßgerät nach einem der vorangegangenen Ansprüche, dadurch gekennzeichnet, daß eine leitende Verbindung von jeder Meßelektrode (2, 3) zu dem zugeordneten Vorverstärker, sowie vorzugsweise auch die notwendige Abschirmung dieser leitenden Verbindung, in der Schicht (6) und vorzugsweise in der LTCC-Keramikfolie (13) mit LTCC-Technologie hergestellt ist.

## Claims

1. A magnetic induction flowmeter for flowing media, having a tube section (1) made of ceramic material which serves as a measuring line, having a magnet for generating a magnetic field which extends perpendicularly to the tube axis, having at least two measuring electrodes (2, 3) which are disposed perpendicularly to the tube axis and perpendicularly to the direction of the magnetic field, having at least two screening electrodes (4, 5) which screen the measuring electrodes (2, 3) from external electric fields, and having a layer (6) which consists of ceramic material and which surrounds the tube section (1), wherein the measuring electrodes (2, 3) and the screening electrodes (4, 5) are provided outside the tube section (1) and wherein the measuring electrodes (2, 3) are disposed in the interior of the layer (6) or at the interface between the layer (6) and the tube section (1), **characterised in that** at least one flexible LTCC ceramic film (7) which sinters at a low temperature forms the layer (6) and that the measuring electrodes (2, 3) and the screening electrodes (4, 5) are disposed on the surfaces or in the interior of the LTCC ceramic film (7).

2. A flowmeter according to any one of the preceding claims, characterised in that parts of the measuring electrodes (2, 3) and parts of the screening electrodes (4, 5) are disposed firstly at the interface between the LTCC ceramic film (7) and the tube section (1) and secondly on the outside of the LTCC ceramic film (7), wherein feed-through contacts (9, 10) are provided which run through the LTCC ceramic film (7).

3. A flowmeter having at least two LTCC ceramic films (7, 8) according to claim 1, characterised in that parts of the measuring electrodes (2, 3) and parts of the screening electrodes (4, 5) are disposed firstly at the interface between the LTCC ceramic films (7, 8) and secondly on the outside of the outer LTCC ceramic film (8), wherein feed-through contacts (9, 10) are provided which run through the outer LTCC ceramic film (8).

4. A flowmeter according to any one of the preceding claims, characterised in that the measuring electrodes (2, 3) are fashioned so that they have a contact face (11, 12) on the outer surface of the layer (6).

5. A flowmeter according to any one of the preceding claims, characterised in that the sections of the screening electrodes (4, 5) on the outside of the layer (6) which surround the measuring electrodes (2, 3) form a continuous face apart from in a region round the contact faces (11, 12) of the measuring electrodes (2, 3).

6. A flowmeter according to any one of the preceding claims, characterised in that the layer (6) comprises a further LTCC ceramic film (13) situated on the outside.

7. A flowmeter according to claim 6, characterised in that the further LTCC ceramic film (13) comprises a further screening electrode (14) and that the further screening electrode (14) surrounds the screening electrodes (4, 5)

8. A flowmeter according to claim 7 , characterised in that the screening electrodes (4, 5) are carried electrically with the measuring electrodes (2, 3) and that the further screening electrode (14) is connected to a fixed reference potential and is preferably earthed.

9. A flowmeter according to any one of the preceding claims, characterised in that a pre-amplifier is provided for each measuring electrode (2, 3) and that the conductor strips and resistance tracks which are necessary for the construction of the pre-amplifier are produced in the layer (6) and preferably in the LTCC ceramic film (13) using LTCC technology.

10. A flowmeter according to any one of the preceding claims, characterised in that a conducting connection is produced from each measuring electrode (2, 3) to the associated pre-amplifier, and the necessary screening of this conducting connection is preferably produced also, in the layer (6) and preferably in the LTCC ceramic film (13), using LTCC technology.

## Revendications

1. Débitmètre à induction magnétique pour des milieux qui s'écoulent, comprenant un élément tubulaire (1) constitué d'une matière céramique et faisant office de conduit de mesure, un aimant pour générer un champ magnétique s'étendant perpendiculairement à l'axe du tube, au moins deux électrodes de mesure (2, 3) disposées perpendiculairement à l'axe du tube et perpendiculairement à la direction du champ magnétique, au moins deux électrodes de protection (4, 5) protégeant les électrodes de mesure (2, 3) contre des champs électriques externes, et une couche (6) entourant l'élément tubulaire (1) et constituée d'une matière céramique, dans lequel les électrodes de mesure (2, 3) et les électrodes de protection (4, 5) sont appliquées à l'extérieur de l'élément tubulaire (1) et dans lequel les électrodes de mesure (2, 3) sont disposées à l'intérieur de la couche (6) ou à l'interface entre la couche (6) et l'élément tubulaire (1), caractérisé en ce qu'au moins une feuille de céramique (7) de type LTCC, flexible et s'agglomérant par frittage à basse température, forme la couche (6) et en ce que les électrodes de mesure (2, 3) et les électrodes de protection (4, 5) sont disposées sur les surfaces ou à l'intérieur de la feuille en céramique (7) de type LTCC.

2. Débitmètre selon l'une quelconque des revendications précédentes, caractérisé en ce que, d'une part, à l'interface entre la feuille en céramique (7) de type LTCC et l'élément tubulaire (1) et, d'autre part, sur le côté externe de la feuille en céramique (7) de type LTCC, sont disposées des parties des électrodes de mesure (2, 3) et des parties des électrodes de protection (4, 5), dans lequel on prévoit des trous métallisés s'étendant à travers la feuille céramique (7) de type LTCC.

3. Débitmètre comprenant au moins deux feuilles en céramique (7, 8) de type LTCC selon la revendication 1, caractérisé en ce que, d'une part, à l'interface entre les feuilles en matière céramique (7, 8) de type LTCC et, d'autre part, sur le côté externe de la feuille externe en céramique (8) de type LTCC, sont disposées des parties des électrodes de mesure (2, 3) et des parties des électrodes de protection (4, 5), dans lequel on prévoit des trous métallisés (9, 10) s'étendant à travers la feuille externe en céramique (8) de type LTCC.

4. Débitmètre selon l'une quelconque des revendications précédentes, caractérisé en ce que les électrodes de mesure (2, 3) sont réalisées de telle sorte qu'elles présentent, sur la surface externe de la couche (6), une surface de contact (11, 12).

5. Débitmètre selon l'une quelconque des revendications précédentes, caractérisé en ce que les électrodes de protection (4, 5) dans les sections entourant les électrodes de mesure (2, 3), sur le côté externe de la couche (6), forment une surface continue, à l'exception d'une zone, autour des surfaces de contact (11, 12) des électrodes de mesure (2, 3).

6. Débitmètre selon l'une quelconque des revendications précédentes, caractérisé en ce que la couche (6) présente une feuille en céramique supplémentaire (13) de type LTCC disposée à l'extérieur.

7. Débitmètre selon la revendication 6, caractérisé en ce que la feuille supplémentaire en céramique (13) de type LTCC présente une électrode de protection supplémentaire (14) et en ce que l'électrode de protection supplémentaire (14) entoure les électrodes de protection (4, 5).

8. Débitmètre selon la revendication 7, caractérisé en ce que les électrodes de protection (4, 5) sont entraînées par voie électrique de manière conjointe avec les électrodes de mesure (2, 3) et en ce que l'électrode de protection supplémentaire (14) est reliée à un potentiel de référence fixe et est de préférence mise à la terre.

9. Débitmètre selon l'une quelconque des revendications précédentes, caractérisé en ce que, pour chaque électrode de mesure (2, 3), on prévoit un préamplificateur et en ce que les pistes conductrices et de résistance requises pour le montage du préamplificateur sont réalisées avec la technologie LTCC dans la couche (6), de préférence dans la feuille en céramique (13) de type LTCC.

10. Débitmètre selon l'une quelconque des revendications précédentes, caractérisé en ce qu'une liaison conductrice de chaque électrode de mesure (2, 3) au préamplificateur correspondant, ainsi que de préférence également la protection requise de cette liaison conductrice sont réalisées avec la technologie LTCC dans la couche (6), de préférence dans la feuille en céramique (13) de type LTCC.
